# EUROPEAN PATENT APPLICATION

(11) **EP 3 712 455 A1**
(43) Date of publication of application: **23.09.2020**
(21) Application number: 20155459.9
(22) Date of filing: 04.02.2020
(51) Int. Cl.: F16D 23/02

(54) **DRIVING APPARATUS FOR ELECTRIC VEHICLE**

(30) Priority: 21.03.2019 KR 20190032618
(71) Applicant: LG Electronics Inc., 07336 SEOUL (KR)
(72) Inventor: AHN, Youngchan, 08592 Seoul (KR); PARK, Yongsik, 08592 Seoul (KR); LEE, Junggu, 08592 Seoul (KR)
(74) Representative: Vossius & Partner Patentanwälte Rechtsanwälte mbB

(57) **Abstract**

A driving apparatus for an electric vehicle includes an input shaft including a first driving gear and a second driving gear, a synchronizer provided between the first driving gear and the second driving gear and selectively coupled to the first driving gear or the second driving gear, an intermediate shaft including a first shift gear coupled to the first driving gear and a second shift gear coupled to the second driving gear, and an output shaft coupled to the intermediate shaft. The synchronizer includes a first coupling ring fixed to the first driving gear and including a first magnet, a second coupling ring fixed to the second driving gear and including a second magnet, and a sleeve provided in the first coupling ring and the second coupling ring and including a winding coil.

## Description

### CROSS-REFERENCE TO RELATED APPLICATIONS

The present application claims priority under 35 U.S.C. 119 and 35 U.S.C. 365 to Korean Patent Application No. 10-2019-0032618 (filed on March 21, 2019), which is hereby incorporated by reference in its entirety.

### BACKGROUND

The present invention relates to a driving apparatus for an electric vehicle.

In recent years, electric vehicles using electric power as a power source have been actively developed in place of vehicles using oil as a power source.

The electric vehicle includes a battery for supplying electric power and a driving apparatus which operates by the battery to rotate an axle. The driving apparatus includes a driving motor for generating power through electric power supplied from the battery and a transmission device (or a gear box) for connecting the driving motor with the axle.

The transmission device may be understood as a device for deceleration or gear shifting. Specifically, the power generated by the driving motor is transmitted to the transmission device and the power transmitted to the transmission device is decelerated or changed and then is transmitted to the axle.

Korean Patent Laid-Open Publication No. 10-2015-0004108 (Publication Date: January 12, 2015) discloses a double-reduction driving apparatus for a hybrid and electric vehicle.

The reduction driving apparatus disclosed in the above-described document includes an input shaft connected to a driving motor, an intermediate shaft and an output shaft, and the output shaft includes a first gear and a second gear.

In addition, the output shaft is provided with a shift sleeve (or a synchronizer) selectively coupled to the first gear or the second gear, such that the shift sleeve slips to shift the gear to the first gear or the second gear according to a gear shifting command.

However, the reduction driving apparatus disclosed in the above-described document has the following problems.

First, since the conventional reduction driving apparatus for an electric vehicle does not have a clutch for interrupting power between the motor and the transmission device at the time of gear shifting, impact may occur due to input torque of the motor when the gear is put out for gear shifting.

Second, impact occurring during gear shifting may be reduced by adding a clutch for interrupting power between the motor and the transmission device. However, in this case, product cost may increase due to addition of the clutch.

Third, since the conventional synchronizer for gear shifting includes a plurality of parts such as a hub, a sleeve, a ring, a fork, a cone, and a friction material and has a complicated structure, it is difficult to assemble the synchronizer. Therefore, misassembling may occur and defective products may occur.

### SUMMARY

An object of the present invention devised to solve the problem lies in a driving apparatus for an electric vehicle capable of minimizing impact due to input torque of a motor at the time of gear shifting without a clutch for interrupting power between the motor and a transmission device.

Another object of the present invention devised to solve the problem lies in a driving apparatus for an electric vehicle capable of primarily performing speed synchronization between an input shaft and a gear through motor control and secondarily performing speed synchronization between the input shaft and the gear through a rotating magnetic field.

Another object of the present invention devised to solve the problem lies in a driving apparatus for an electric vehicle in which the structure of a synchronizer for gear shifting is very simple and the number of parts is remarkably reduced.

The invention is specified by the independent claim. Preferred embodiments are defined in the dependent claims.

A driving apparatus for an electric vehicle according to an embodiment of the present invention includes a driving motor and a transmission device connected to the driving motor to receive driving force of the driving motor.

The transmission device includes an input shaft connected to a rotation shaft of the driving motor and including a first driving gear and a second driving gear, a synchronizer provided between the first driving gear and the second driving gear and selectively coupled to the first driving gear or the second driving gear, an intermediate shaft including a first shift gear coupled to the first driving gear and a second shift gear coupled to the second driving gear, and an output shaft coupled to the intermediate shaft.

In particular, the synchronizer includes a first coupling ring fixed to the first driving gear and including a first magnet, a second coupling ring fixed to the second driving gear and including a second magnet, and a sleeve provided in the first coupling ring and the second coupling ring and including a winding coil.

According to the configuration of the synchronizer, since speed synchronization between an input shaft and a gear is primarily performed through motor control and speed synchronization between the input shaft and the gear is secondarily performed through a rotating magnetic field, it is possible to minimize impact due to input torque of a motor at the time of gear shifting, without a clutch for interrupting power between the motor and a transmission device. In addition, since the structure of a synchronizer for gear shifting can be very simple and the number of parts can be remarkably reduced, product costs can be reduced.

Specifically, the first coupling ring and the second coupling ring may be provided to surround a circumference of the input shaft. At this time, a first bearing provided between an outer circumferential surface of the input shaft and the first driving gear to rotatably support the first driving gear may be further included, and the first coupling ring may be inserted into an outer circumferential surface of the first driving gear. A second bearing provided between an outer circumferential surface of the input shaft and the second driving gear to rotatably support the second driving gear may be further included, and the second coupling ring may be inserted into an outer circumferential surface of the second driving gear.

The sleeve may be provided to surround a circumference of the input shaft. The first magnet and the second magnet may be disposed to face each other.

A plurality of first magnets may be spaced apart from each other inside the first coupling ring in a circumferential direction, and a plurality of second magnets may be spaced apart from each other inside the second coupling ring in a circumferential direction.

The winding coil may be disposed between the first magnet and the second magnet. That is, the first magnet, the winding coil and the second magnet may overlap one another in an axial direction.

The winding coil may include a plurality of winding coils wound inside the sleeve, and the plurality of winding coils may be spaced apart from each other inside the sleeve in a circumferential direction.

A brush provided inside the input shaft to apply current to the winding coil may be further provided. A wire extending from the brush to be connected to a controller along a cavity of the input shaft may be further included.

An actuator configured to move the sleeve in an axial direction on an outer circumferential surface of the input shaft may be further included. Therefore, the sleeve may be selectively coupled to the first driving gear or the second driving gear.

A cone formed at one side of the first coupling ring or the second coupling ring and selectively coupled to a portion of the sleeve may be further included. The cone may include a first cone formed at one side of the first coupling ring and a second cone formed at one side of the second coupling ring in correspondence with the first cone.

The first cone may protrude from the outside of the first coupling ring toward the sleeve and the second cone may protrude from the outside of the second coupling toward the sleeve.

The present invention also relates to a driving apparatus for an electric vehicle, comprising a driving motor including a stator and a rotor; and a transmission device connected to the driving motor to receive driving force of the driving motor. The transmission device includes an input shaft connected to a rotation shaft of the driving motor and including a first driving gear and a second driving gear; a synchronizer provided between the first driving gear and the second driving gear and selectively coupled to the first driving gear or the second driving gear; an intermediate shaft including a first shift gear coupled to the first driving gear and a second shift gear coupled to the second driving gear; and an output shaft coupled to the intermediate shaft. The synchronizer includes a first coupling ring fixed to the first driving gear and including a first magnet; a second coupling ring fixed to the second driving gear and including a second magnet; and a sleeve provided in the first coupling ring and the second coupling ring and including a winding coil.

Preferably, the first coupling ring and the second coupling ring are provided to surround a circumference of the input shaft.

Preferably, the driving apparatus further comprises a first bearing provided between an outer circumferential surface of the input shaft and the first driving gear to rotatably support the first driving gear.

Preferably, the first coupling ring is inserted into an outer circumferential surface of the first driving gear.

Preferably, the driving apparatus further comprises a second bearing provided between an outer circumferential surface of the input shaft and the second driving gear to rotatably support the second driving gear.

Preferably, the second coupling ring is inserted into an outer circumferential surface of the second driving gear.

Preferably, the sleeve is provided to surround a circumference of the input shaft.

Preferably, the first magnet and the second magnet are disposed to face each other.

Preferably, a plurality of first magnets is spaced apart from each other inside the first coupling ring in a circumferential direction.

Preferably, a plurality of second magnets is spaced apart from each other inside the second coupling ring in a circumferential direction.

Preferably, the winding coil is disposed between the first magnet and the second magnet.

Preferably, the first magnet, the winding coil and the second magnet overlap one another in an axial direction.

Preferably, the winding coil includes a plurality of winding coils wound inside the sleeve.

Preferably, the plurality of winding coils is spaced apart from each other inside the sleeve in a circumferential direction.

Preferably, the driving apparatus further comprises a brush provided inside the input shaft to apply current to the winding coil.

Preferably, the driving apparatus further comprises a wire extending from the brush to be connected to a controller along a cavity of the input shaft.

Preferably, the driving apparatus further comprises an actuator configured to move the sleeve in an axial direction on an outer circumferential surface of the input shaft.

### BRIEF DESCRIPTION OF THE DRAWINGS

FIG. 1 is a block diagram showing the configuration of a driving apparatus for an electric vehicle according to an embodiment of the present invention.
FIG. 2 is a cross-sectional view showing a transmission device according to an embodiment of the present invention.
FIG. 3 is a cross-sectional view showing the configuration of a synchronizer according to an embodiment of the present invention.
FIG. 4 is a view showing the configuration of a coupling ring according to an embodiment of the present invention.
FIG. 5 is a view showing the configuration of a sleeve according to an embodiment of the present invention.
FIG. 6 is a view showing a state in which the sleeve according to the embodiment of the present invention is put at a neutral position.
FIG. 7 is a view showing a state in which the sleeve according to the embodiment of the present invention is moved to a first coupling ring side.
FIG. 8 is a view showing a state in which the sleeve according to the embodiment of the present invention is moved to a second coupling ring side.
FIG. 9 is a view showing synchronization between a coil and a magnet according to an embodiment of the present invention.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the invention. To avoid detail not necessary to enable those skilled in the art to practice the invention, the description may omit certain information known to those skilled in the art. The following detailed description is, therefore, not to be taken in a limiting sense.

Also, in the description of embodiments, terms such as first, second, A, B, (a), (b) or the like may be used herein when describing components of the present invention. Each of these terminologies is not used to define an essence, order or sequence of a corresponding component but used merely to distinguish the corresponding component from other component (s) . It should be noted that if it is described in the specification that one component is "connected," "coupled" or "joined" to another component, the former may be directly "connected," "coupled," and "joined" to the latter or "connected", "coupled", and "joined" to the latter via another component.

Exemplary embodiments of the present invention will be described below in detail with reference to the accompanying drawings in which the same reference numbers are used throughout this specification to refer to the same or like parts. In describing the present invention, a detailed description of known functions and configurations will be omitted when it may obscure the subject matter of the present invention. The accompanying drawings are used to help easily understood the technical idea of the present invention and it should be understood that the idea of the present invention is not limited by the accompanying drawings.

It will be understood that, although the terms first, second, A, B, (a), (b), etc. may be used herein to describe various elements of the present invention, these terms are only used to distinguish one element from another element and essential, order, or sequence of corresponding elements are not limited by these terms. It will be understood that when one element is referred to as "being connected to", "being coupled to", or "accessing" another element, one element may "be connected to", "be coupled to", or "access" another element via a further element although one element may be directly connected to or may directly access another element.

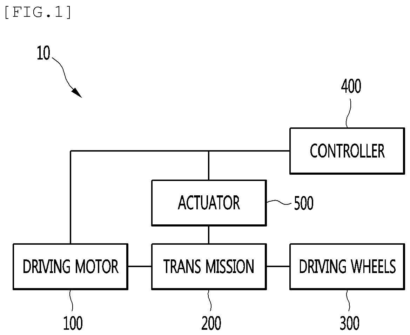

FIG. 1 is a block diagram showing the configuration of a driving apparatus for an electric vehicle according to an embodiment of the present invention.

Referring to FIG. 1, the driving apparatus for the electric vehicle (hereinafter referred to as a driving apparatus) 100 according to the embodiment of the present invention includes a driving motor 100, a transmission device 200 and driving wheels 300.

The driving motor 100 generates driving force by applied current.

Specifically, the driving motor 100 includes a stator and a rotor disposed inside the stator. The stator is fixed to a motor housing, and the rotor is rotatably disposed inside the stator. In addition, when electric power (AC current) is applied to the stator, the rotor may rotate by electromagnetic force.

The stator and the rotor are provided in a cylindrical shape with a hollow formed therein. Specifically, the insides of the stator and the rotor are opened in an axial direction. In addition, the rotor is axially disposed inside the stator and a rotor shaft is radially disposed inside the rotor.

The rotor shaft may be understood as a component for connecting the rotor with the below-described transmission device. The rotor shaft is composed of a hollow shaft and may be rotated with the rotor.

The transmission device 200 converts power generated by the driving motor 100 into required rotational force according to a speed and transmits the rotational force to an axle. The transmission device 200 includes a plurality of gears, which may be shifted according to the shift ratio of the plurality of gears.

The transmission device 200 may include a gear box for transmitting driving force or rotational force of the driving motor 100 to the axle. The gear box may include a shaft coupled with the plurality of gears and bearings.

The driving wheels 300 may rotate by rotational force transmitted from the transmission device 200 to the axle. A plurality of driving wheels 300 may be provided to support the load of the electric vehicle. The plurality of driving wheels 300 enables the electric vehicle to travel through rolling on the ground.

The driving apparatus 10 further includes a controller 400.

The controller 400 controls driving of the driving motor 100 and the transmission device 200. The controller 400 may apply electric power or AC current to the driving motor 100. The controller 400 may adjust a frequency to control the driving force or the rotational speed of the driving motor 100.

The driving apparatus 10 further includes an actuator 500.

The actuator 500 controls driving of a synchronizer included in the transmission device 200. The actuator 500 controls slipping of a sleeve included in the synchronizer according to a gear shifting command of the controller 400, thereby smoothly shifting gears.

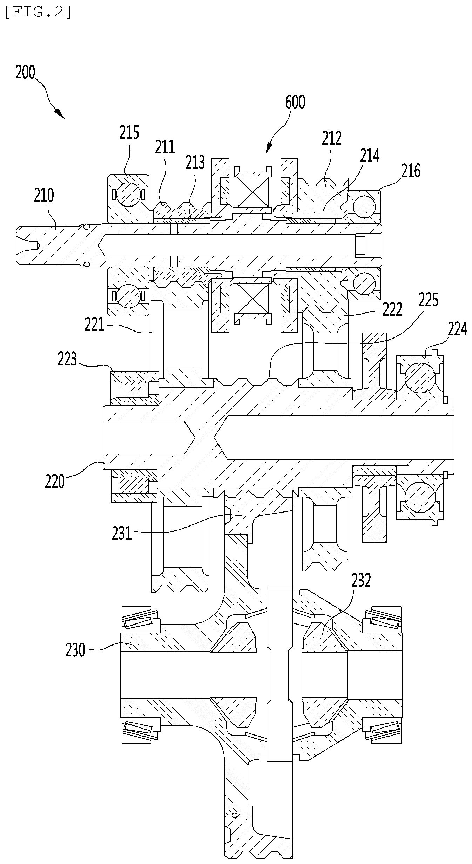

FIG. 2 is a cross-sectional view showing a transmission device according to an embodiment of the present invention.

Referring to FIG. 2, the transmission device 200 according to the embodiment of the present invention includes an input shaft 210, an intermediate shaft 220 and an output shaft 230.

The input shaft 210 is connected with the rotor shaft or the rotation shaft of the driving motor 100 to receive the driving force generated in the driving motor 100.

The input shaft 210 may be referred to as a "driving shaft".

The transmission device 200 further includes a first driving gear 211 and a second riving gear 212 coupled to an outer circumferential surface of the input shaft 210.

The first driving gear 211 and the second driving gear 212 are installed to surround the circumference of the input shaft 210. The diameter of the first driving gear 211 may be less than that of the second driving gear 212. The first driving gear 211 and the second driving gear 212 may be sequentially spaced apart from the front end of the input shaft 210.

Here, the term "front end" means one end (the left end in FIG. 2) of the input shaft 210 connected to the rotation shaft of the driving motor 100 and the term "rear end" means the other end (the right end in FIG. 2) corresponding to the opposite side of the front end of the input shaft 210.

In addition, the transmission device 200 further includes a plurality of bearings 213 and 214 coupled to the outer circumferential surface of the input shaft 210.

The plurality of bearings 213 and 214 includes the first bearing 213 rotatably supporting the first driving gear 211 and the second bearing 214 rotatably supporting the second driving gear 212.

The first bearing 213 is provided between the outer circumferential surface of the input shaft 210 and the first driving gear 211 to rotatably support the first driving gear 211.

The second bearing 214 is provided between the outer circumferential surface of the input shaft 210 and the second driving gear 212 to rotatably support the second driving gear 212.

In addition, the transmission device 200 further includes a synchronizer 600 coupled to the outer circumferential surface of the input shaft 210.

The synchronizer 600 is provided between the first driving gear 211 and the second driving gear 212. The synchronizer 600 may be selectively engaged with the first driving gear 211 or the second driving gear 212, as the sleeve slides in the axial direction (to the left or right in the figure) according to the gear shifting command of the controller 400.

The transmission device 200 further includes a plurality of ball bearings 215 and 216 provided on the outer circumferential surface of the input shaft 210.

The plurality of ball bearings 215 and 216 includes the first ball bearing 215 disposed at the front side of the input shaft 210 and the second ball bearing 216 disposed at the rear side of the input shaft 210.

Specifically, the first ball bearing 215 may be disposed at the front side of the first driving gear 211, and the second ball bearing 216 may be disposed on the rear end of the input shaft 210. Therefore, both ends of the input shaft 210 may be rotatably supported by the plurality of bearings 215 and 216.

The intermediate shaft 220 receives torque and rotational force from the input shaft 210. The intermediate shaft 220 changes the received torque and rotational force and then transmits the changed torque and rotational force to the output shaft 230. The intermediate shaft 220 may be a hollow shaft.

The intermediate shaft 220 may be referred to as a "shift shaft" or an "idle shaft".

The transmission device 200 further includes a first shift gear 221 and a second shift gear coupled to the outer circumferential surface of the intermediate shaft 220.

The diameter of the first shift gear 221 may be greater than that of the second shift gear 222. The first shift gear 221 and the second shift gear 222 may be sequentially spaced apart from the front end of the intermediate shaft 220.

The first shift gear 221 and/or the second shift gear 222 may be formed integrally with the intermediate shaft 220.

The first shift gear 221 is engaged with the first driving gear 211 and the second shift gear 222 is engaged with the second driving gear 212.

The transmission device 200 further includes a plurality of bearings 223 and 224 provided on the outer circumferential surface of the intermediate shaft 220.

The plurality of bearings 223 and 224 includes a front bearing 223 disposed on the front end of the intermediate shaft 220 and a rear bearing 224 disposed on the rear end of the intermediate shaft 220. Therefore, both ends of the intermediate shaft 220 are rotatably supported by the plurality of bearings 223 and 224.

The transmission device 200 further includes a driven gear 225 provided on the outer circumferential surface of the intermediate shaft 220.

The driven gear 225 transmits the increased or decreased torque and rotational force to the output shaft 230 through the first shift gear 221 or the second shift gear 222.

Specifically, the driven gear 225 may be disposed between the first shift gear 221 and the second shift gear 222. The driven gear 225 may be integrally formed on the outer circumferential surface of the intermediate shaft 220 through spline coupling.

The output shaft 230 receives the increased/decreased torque and rotational force through the intermediate shaft 220. The output shaft 230 transmits the received torque and rotational force to the axle to rotate the driving wheels 300. The output shaft 230 may be connected to the axle. In addition, both ends of the output shaft 230 may be connected to the axle.

The output shaft 230 may be a hollow shaft. The output shaft 230 may include the axle.

The transmission device 200 further includes an output gear 231 coupled to the outer circumferential surface of the output shaft 230.

The output gear 231 is engaged with the driven gear 225 to receive the torque and the rotational force from the intermediate shaft 230. The output gear 231 may be connected to a differential gear unit 232.

The transmission device 200 further includes the differential gear unit 232 provided inside the output shaft 230.

The differential gear unit 232 includes a differential gear case, a differential gear and a differential shaft. The driven gear 225 may be disposed outside the differential gear unit 232.

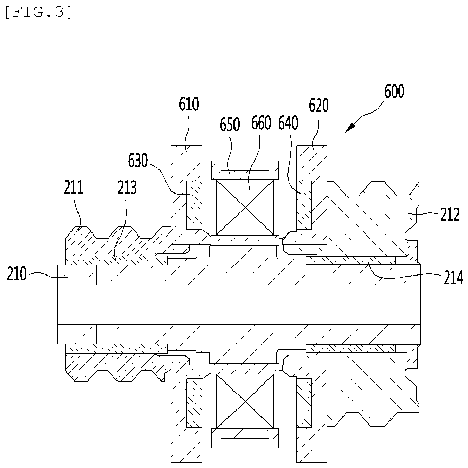

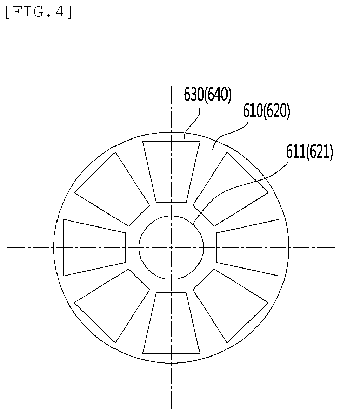

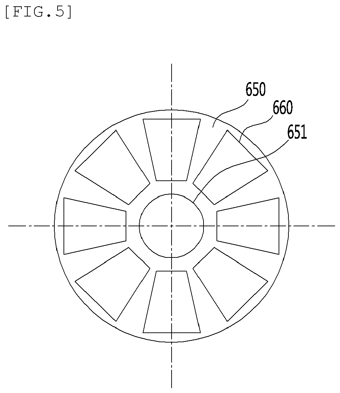

FIG. 3 is a cross-sectional view showing the configuration of a synchronizer according to an embodiment of the present invention, FIG. 4 is a view showing the configuration of a coupling ring according to an embodiment of the present invention, and FIG. 5 is a view showing the configuration of a sleeve according to an embodiment of the present invention.

Referring to FIGS. 3 to 5, the synchronizer 600 according to the embodiment of the present invention is provided outside the input shaft 210 and is selectively engaged with the first driving gear 211 or the second driving gear 212.

The synchronizer 600 includes a plurality of coupling rings 610 and 620 disposed outside the input shaft 210. The plurality of coupling rings 610 and 620 includes the first coupling ring 610 disposed to surround the circumference of the input shaft 210 and the second coupling ring 620 spaced apart from the first coupling ring 610 in the axial direction.

Specifically, the first coupling ring 610 and the second coupling ring 620 have a ring shape and have through-holes 611 and 621 formed therein, respectively. The input shaft 210 is disposed in the through-holes 611 and 621. The first coupling ring 610 and the second coupling ring 620 may have a symmetrical structure.

The first coupling ring 610 and the second coupling ring 620 are disposed outside the input shaft 210. At this time, the first coupling ring 610 may be fixed to the outer surface of the first driving gear 211 and the second coupling ring 620 may be fixed to the outer surface of the second driving gear 212.

According to the present embodiment, the first coupling ring 610 is inserted into the outer circumferential surface of the first driving gear 211 to rotate with the first driving gear 211. The first coupling ring 610 may be fixed to the outside corresponding to the rear end of the first driving gear 211.

The second coupling ring 620 is inserted into the outer circumferential surface of the second driving gear 212 to rotate with the second driving gear 212. The second coupling ring 620 may be fixed to the outside corresponding to the front end of the second driving gear 212.

The first coupling ring 610 and the second coupling ring 620 are disposed to face each other. The first coupling ring 610 and the second coupling ring 620 are spaced apart from each other in the axial direction.

The synchronizer 600 further includes a plurality of magnets 630 and 640 provided in the first coupling ring 610 and the second coupling ring 620.

The plurality of magnets 630 and 640 includes the first magnet 630 provided in the first coupling ring 610 and the second magnet 640 provided in the second coupling ring 620. The first magnet 630 and the second magnet 640 may include permanent magnets.

Specifically, the first magnet 630 may be provided inside the first coupling ring 610 and the second magnet 640 may be provided inside the second coupling ring 620. At this time, the first magnet 630 and the second magnet 640 may be disposed to face each other.

According to one embodiment, the first magnet 630 may include a plurality of magnets spaced apart from each other inside the first coupling ring 610 in the circumferential direction.

That is, in FIG. 4, the first magnet 630 may include eight magnets spaced apart from each other in the circumferential direction. The eight magnets may be spaced apart from each other at the same interval.

In addition, the second magnet 640 may include a plurality of magnets spaced apart from each other inside the second coupling ring 620 in the circumferential direction.

That is, in FIG. 4, the second magnet 640 may include eight magnets spaced apart from each other in the circumferential direction. The eight magnets may be spaced apart from each other at the same interval.

In summary, each of the first magnet 630 and the second magnet 640 may include a plurality of magnets having a circular band shape in the circumferential direction of the first coupling ring 610 and the second coupling ring 620.

In addition, the synchronizer 600 further includes a sleeve 650 provided on the outer circumferential surface of the input shaft 210 and a coil 660 provided inside the sleeve 650.

The sleeve 650 may be formed in a cylindrical shape and may have a through-hole 651 formed therein. In addition, the input shaft 210 may be received in the through-hole 650 of the sleeve 650.

In addition, a plurality of poles, on which the coil 660 is wound, is provided inside the sleeve 650. The plurality of poles may be spaced apart from each other inside the sleeve 650 in the circumferential direction.

Meanwhile, although not shown, a hub (not shown) may be provided between the sleeve 650 and the input shaft 210. The hub may be coupled to the outer circumferential surface of the input shaft 210 and connected to the sleeve 650. In addition, the sleeve 650 may move in the axial direction in a state of being supported by the hub. The sleeve 650 may be connected with the actuator 500 to slip in the axial direction by on/off operation of the actuator 500.

The sleeve 650 is located between the first coupling ring 610 and the second coupling ring 620. At this time, the sleeve 650 may be moved by the actuator 500 in the axial direction and may be selectively coupled with the first coupling ring 610 or the second coupling ring 620. That is, the sleeve 650 may be moved to be close to the first coupling ring 610 or the second coupling ring 620.

The coil 660 is installed inside the sleeve 650 to perform an electromagnet function. The coil 660 may be wound along the inside of the sleeve 650 in the circumferential direction. The coil 660 is magnetized When constant current flows in the coil 660 and returns to an original state when current is interrupted.

According to one embodiment, the coil 660 includes a plurality of winding coils wound inside the sleeve 650. The plurality of winding coils may be wound on the poles provided inside the sleeve 650. That is, the plurality of winding coils may be spaced apart from each other inside the sleeve 650 in the circumferential direction.

That is, in FIG. 5, the coil 660 may include eight winding coils spaced apart from each other in the circumferential direction of the sleeve 650. The eight winding coils may be spaced apart from each other at the same interval. The eight winding coils may be disposed in correspondence with the eight magnets configuring the first magnet 630 and/or the second magnet 640.

In addition, the coil 660 may be fixed to the inside of the sleeve 650 and may be moved in the axial direction according to slipping of the sleeve 650. In this case, the coil 660 may become close to the first magnet 630 or the second magnet 640.

In addition, the coil 660 may be disposed to face the first magnet 630 and the second magnet 640. That is, the first magnet 630 may overlap the coil 660 and the second magnet 640 in the axial direction.

Hereinafter, the configuration and operation of the synchronizer will be described in greater detail with reference to the drawing.

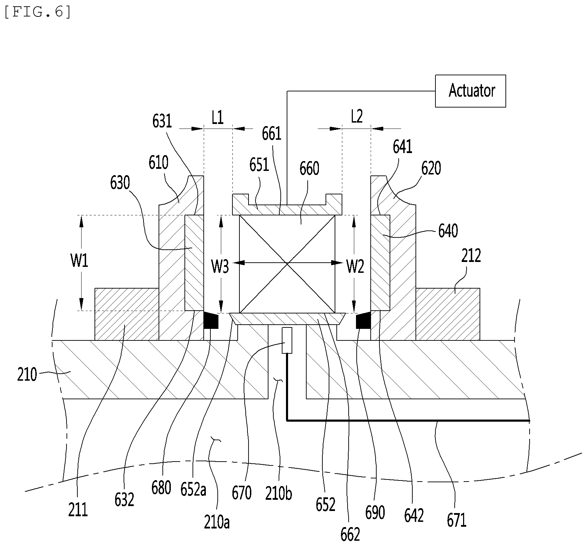

FIG. 6 is a view showing a state in which the sleeve according to the embodiment of the present invention is put at a neutral position.

Referring to FIG. 6, as described above, the synchronizer 600 is located in a space between the first coupling ring 610 and the second coupling ring 620.

Specifically, the coil 660 of the sleeve 650 is disposed between the first magnet 630 of the first coupling ring 610 and the second magnet 640 of the second coupling ring 620. At this time, one surface or the front surface of the coil 660 may face the first magnet 630 and the other surface or the rear surface of the coil 660 may face the second magnet 640.

As shown in FIG. 6, the sleeve 650 may be located at a middle point between the first coupling ring 610 and the second coupling ring 620. That is, in the sleeve 650, the distance L1 between the front surface of the sleeve 650 and the first coupling ring 610 may be equal to the distance L2 between the front surface of the sleeve 650 and the second coupling ring 620.

The middle point between the first coupling ring 610 and the second coupling ring 620 may be referred to as a "neutral position" or an "initial position". That is, when the sleeve 650 is located at the neutral position, the distance L1 between the sleeve 650 and the first coupling ring 610 is equal to the distance L2 between the sleeve 650 and the second coupling ring 620.

Meanwhile, the radial width W1 of the first magnet 630 may be equal to the radial width W2 of the second magnet 640. In addition, the radial width W3 of the coil 660 may be equal to the width W1 of the first magnet 630 or the width W2 of the second magnet 640. That is, the coil 660 and the first and second magnets 630 and 640 may be aligned.

According to the present embodiment, a virtual line connecting the outer surface 661 of the coil 660 and the outer surfaces 631 and 641 of the first and second magnets 630 and 640 may form a straight line. In addition, a virtual line connecting the inner surface 662 of the coil 660 and the inner surfaces 632 and 642 of the first and second magnets 630 and 640 may form a straight line.

By such a configuration, when the coil 660 moves toward the first magnet 630 or the second magnet 640, speed synchronization between the coil 660 and the first magnet 630 or the second magnet 640 may be easily performed by a rotating magnetic field.

Meanwhile, the synchronizer 600 further includes a brush 670 for applying current to the coil 660. The brush 60 is provided inside the input shaft 210.

Specifically, the brush 60 may be disposed in a brush hole 210b extending from a cavity 210a of the input shaft 210 in the radial direction. In addition, the brush 60 may be electrically connected to the controller 400 through a wire 671. In this case, the wire 671 may extend from the brush 60 to the controller 400 through the brush hole 210b and the cavity 210a.

The brush 60 is brought into contact with a slip ring by spring tension to selectively supply current to the coil 660.

In addition, the synchronizer 600 further includes cones 680 and 690 for coupling with the sleeve 650. The cones 680 and 690 are provided in the first coupling ring 610 and the second coupling ring 620, respectively.

Specifically, the cones 680 and 690 include the first cone 680 provided inside the first coupling ring 610 and the second cone 690 provided inside the second coupling ring 620.

The first cone 680 protrudes from one side of the first coupling ring 610 toward the sleeve 650 and the second cone 690 protrudes from one side of the second coupling ring 620 toward the sleeve 650. Each of the first cone 680 and the second cone 690 is formed to have a conical friction surface. In addition, the first cone 680 and the second cone 690 may be brought into contact with the friction surface formed at one side of the sleeve 650 to match or synchronize the rotational speeds of the gears.

Meanwhile, the sleeve 650 includes an outer sleeve 651 forming an outer portion and an inner sleeve 652 forming an inner portion. Friction surfaces 652a which are brought into contact with the first cone 680 and the second cone 690 may be formed at both sides of the inner sleeve 652.

That is, the first cone 680 and the second cone 690 may be provided at points corresponding to the friction surfaces 652a of the inner sleeve 652. Therefore, when the sleeve 650 is moved in the axial direction, the friction surfaces 652a of the inner sleeve 652 may be coupled with the first cone 680 or the second cone 690 and thus the sleeve 650 and the first driving gear 211 or the second driving gear 212 may be coupled.

Although the friction surfaces 652a are described as being provided in the inner sleeve 652 in the present embodiment, the present invention is not limited thereto. For example, the friction surfaces may be provided in the outer sleeve 651. In this case, the first cone 680 and the second cone 690 may be disposed at corresponding points of the outer sleeve 651.

Alternatively, the friction surfaces may be formed in the inner sleeve 652 and the outer sleeve 651.

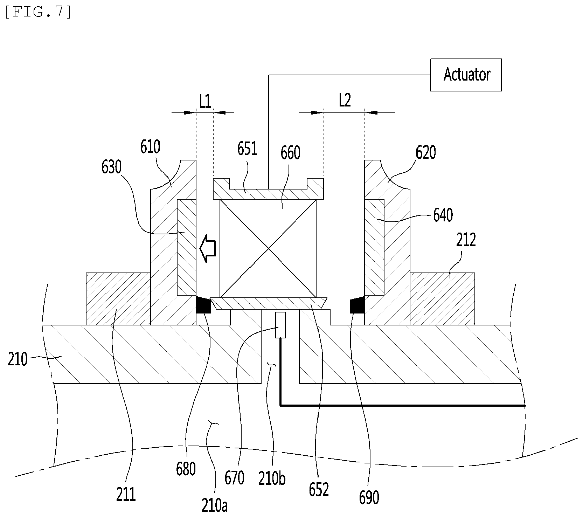

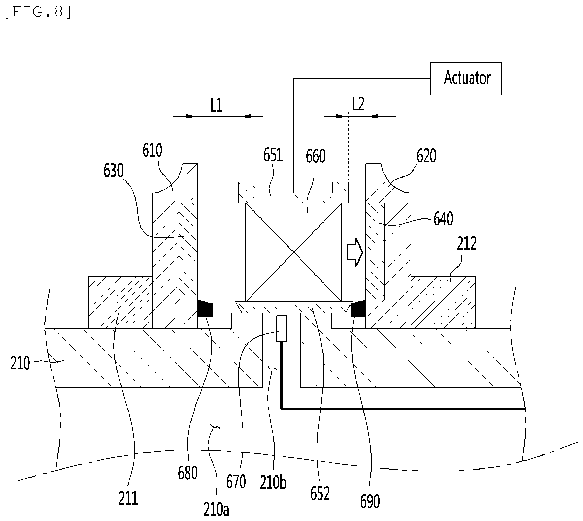

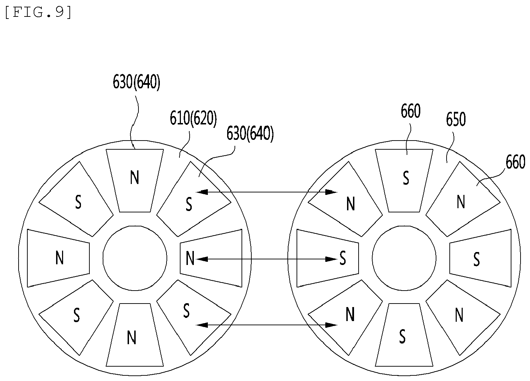

FIG. 7 is a view showing a state in which the sleeve according to the embodiment of the present invention is moved to a first coupling ring side, FIG. 8 is a view showing a state in which the sleeve according to the embodiment of the present invention is moved to a second coupling ring side, and FIG. 9 is a view showing synchronization between a coil and a magnet according to an embodiment of the present invention.

First, referring to FIG. 7, when a first gear shifting command is input through an operation unit or the controller 400 of the electric vehicle, the controller 400 may increase or decrease the rotational speed of the driving motor 100. That is, the controller 400 decreases the rotational speed of the driving motor 100 to match the rotational speed of the rotor shaft with the first driving gear 211.

In addition, the controller 400 generates a magnetic field, by enabling current to flow in the coil 660 in a state in which a relative speed between the rotor shaft and the first driving gear 211 is very low. The controller 400 controls the actuator 500 such that the sleeve 650 moves toward the first coupling ring 610 corresponding to the first driving gear 211.

Then, as shown in FIG. 9, attraction is generated by polarity (N-polarity or S-polarity) formed in the coil 660 and polarity (S-polarity or N-polarity) formed in the first magnet 630, and the relative speed between the rotor shaft and the first driving gear 211 converges on zero by such attraction. Additionally, when the sleeve 650 is further moved to the first coupling ring 610, the friction surfaces 652a of the sleeve 650 and the friction surface of the first cone 680 are brought into contact with each other, thereby synchronizing the rotational speeds of the rotor shaft and the gear.

In summary, the rotational speed of the input shaft 210 and the rotational speed of the first driving gear 211 are primarily synchronized by current control of the driving motor 100, and the rotational speed of the input shaft 210 and the rotational speed of the first driving gear 211 are secondarily synchronized by electromagnetic force between the coil 660 and the first magnet 630. Finally, the sleeve 650 is coupled with the first cone 680 in a state in which the relative speed between the input shaft 210 and the first driving gear 211 is very low, such that the input shaft 210 and the first driving gear 211 are fully synchronized.

Meanwhile, referring to FIG. 8, when a second gear shifting command is input through an operation unit or the controller 400 of the electric vehicle, the controller 400 may increase or decrease the rotational speed of the driving motor 100. That is, the controller 400 decreases the rotational speed of the driving motor 100 to match the rotational speed of the rotor shaft with the second driving gear 212.

In addition, the controller 400 generates a magnetic field, by enabling current to flow in the coil 660 in a state in which a relative speed between the rotor shaft and the second driving gear 212 is very low. The controller 400 controls the actuator 500 such that the sleeve 650 moves toward the second coupling ring 620 corresponding to the second driving gear 212.

Then, as shown in FIG. 9, attraction is generated by polarity (N-polarity or S-polarity) formed in the coil 660 and polarity (S-polarity or N-polarity) formed in the first magnet 630, and the relative speed between the rotor shaft and the second driving gear 212 converges on zero by such attraction. Additionally, when the sleeve 650 is further moved to the second coupling ring 620, the friction surfaces 652a of the sleeve 650 and the friction surface of the second cone 690 are brought into contact with each other to fully synchronize the rotational speeds of the rotor shaft and the gear.

In summary, the rotational speed of the input shaft 210 and the rotational speed of the second driving gear 212 are primarily synchronized by current control of the driving motor 100, and the rotational speed of the input shaft 210 and the rotational speed of the second driving gear 212 are secondarily synchronized by electromagnetic force between the coil 660 and the second magnet 640. Finally, the sleeve 650 is coupled with the second cone 690 in a state in which the relative speed between the input shaft 210 and the second driving gear 212 is very low, such that the input shaft 210 and the second driving gear 212 are fully synchronized.

The driving apparatus for the electric vehicle according to the embodiment of the present invention having the above configuration has the following effects.

First, the synchronizer for gear shifting includes a first coupling ring fixed to a first driving gear and including a first magnet, a second coupling ring fixed to a second driving gear and including a second magnet, and a sleeve provided between the first coupling ring and the second coupling ring and including a winding coil.

Therefore, since speed synchronization between the input shaft and the gear is primarily performed through motor control and speed synchronization between the input shaft and the gear is secondarily performed through a rotating magnetic field, it is possible to minimize impact due to input torque of the motor at the time of gear shifting without a clutch for interrupting power between the motor and the transmission device.

Second, the conventional synchronizer substantially uses a mechanical friction material for speed synchronization between the motor and the gear. However, in the present invention, since a friction material for speed synchronization between the motor and the gear is not necessary, it is possible to improve product reliability and to increase a product lifespan.

Third, since the synchronizer of the present invention has a simpler structure and a smaller number of parts as compared to the conventional synchronizer, the product cost is reduced and a defect rate is reduced.

Fourth, in the present invention, since the capacity of the vehicle is capable of being changed according to the level of the current applied to the motor or the coil, it is not necessary to change design according to the capacity of the vehicle.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A driving apparatus (10) for an electric vehicle, comprising:
a driving motor (100) including a stator and a rotor; and
a transmission device (200) connected to the driving motor (100) to receive driving force of the driving motor (100),
wherein the transmission device (200) includes:
an input shaft (210) connected to a rotation shaft of the driving motor (100) and including a first driving gear (211) and a second driving gear (212);
a synchronizer (600) provided between the first driving gear (211) and the second driving gear (212) and selectively coupled to the first driving gear (211) or the second driving gear (212);
an intermediate shaft (220) including a first shift gear (221) coupled to the first driving gear (211) and a second shift gear coupled to the second driving gear (212); and
an output shaft (230) coupled to the intermediate shaft (220), and
wherein the synchronizer (600) includes:
a first coupling ring (610) fixed to the first driving gear (211) and including a first magnet (630);
a second coupling ring (620) fixed to the second driving gear (212) and including a second magnet (640); and
a sleeve (650) provided in the first coupling ring (610) and the second coupling ring (620) and including a winding coil.

2. The driving apparatus (10) according to claim 1, wherein the first coupling ring (610) and the second coupling ring (620) are provided to surround a circumference of the input shaft (210).

3. The driving apparatus (10) according to claim 1 or 2, further comprising a first bearing (213) provided between an outer circumferential surface of the input shaft (210) and the first driving gear (211) to rotatably support the first driving gear (211),
wherein the first coupling ring (610) is inserted into an outer circumferential surface of the first driving gear (211) .

4. The driving apparatus (10) according to any one of claims 1 to 3, further comprising a second bearing (214) provided between an outer circumferential surface of the input shaft (210) and the second driving gear (212) to rotatably support the second driving gear (212),
wherein the second coupling ring (620) is inserted into an outer circumferential surface of the second driving gear (212) .

5. The driving apparatus (10) according to any one of claims 1 to 4, wherein the sleeve (650) is provided to surround a circumference of the input shaft (210).

6. The driving apparatus (10) according to any one of claims 1 to 5, wherein the first magnet (630) and the second magnet (640) are disposed to face each other.

7. The driving apparatus (10) according to any of claims 1 to 6, wherein a plurality of first magnets (630) is spaced apart from each other inside the first coupling ring (610) in a circumferential direction.

8. The driving apparatus (10) according to any one of claims 1 to 7, wherein a plurality of second magnets (640) is spaced apart from each other inside the second coupling ring (620) in a circumferential direction.

9. The driving apparatus (10) according to any one of claims 1 to 8, wherein the winding coil is disposed between the first magnet (630) and the second magnet (640).

10. The driving apparatus (10) according to any one of claims 1 to 9, wherein the first magnet (630), the winding coil and the second magnet (640) overlap one another in an axial direction.

11. The driving apparatus (10) according to any one of claims 1 to 10, wherein the winding coil includes a plurality of winding coils wound inside the sleeve (650).

12. The driving apparatus (10) according to claim 11, wherein the plurality of winding coils is spaced apart from each other inside the sleeve (650) in a circumferential direction.

13. The driving apparatus (10) according to any one of claims 1 to 12, further comprising a brush (60) provided inside the input shaft (210) to apply current to the winding coil.

14. The driving apparatus (10) according to claim 13, further comprising a wire (671) extending from the brush (60) to be connected to a controller along a cavity of the input shaft (210).

15. The driving apparatus (10) according to any one of claims 1 to 14, further comprising an actuator (500) configured to move the sleeve (650) in an axial direction on an outer circumferential surface of the input shaft (210) .
